# EUROPÄISCHE PATENTSCHRIFT

(11) **EP 1 118 800 B1**
(45) Veröffentlichungstag und Bekanntmachung des Hinweises auf die Patenterteilung: **15.04.2009**
(21) Anmeldenummer: 00123028.3
(22) Anmeldetag: 24.10.2000
(51) Int. Cl.: F16H 61/00

(54) **Steuereinrichtung für ein Getriebe**
Control unit for a transmission
Dispositif de commande d'une boîte de vitesses

(30) Priorität: 22.01.2000 DE 10002693
(43) Veröffentlichungstag der Anmeldung: 25.07.2001
(73) Patentinhaber: WABCO GmbH, 30453 Hannover (DE)
(72) Erfinder: Albs, Heinz-Hagen, 31135 Hildesheim (DE); Homann, Peter, 31535 Neustadt (DE); Klatt, Alfred, 29336 Wathlingen (DE); Klik, Stefan, 30173 Hannover (DE); Thies, Holger, 31515 Wunstorf (DE)
(74) Vertreter: Schrödter, Manfred

(56) Entgegenhaltungen:
- EP-A- 0 877 877
- EP-B- 1 177 393
- DE-A1- 19 637 001
- DE-A1- 19 756 639

## Beschreibung

Die Erfindung betrifft eine Steuereinrichtung für ein Getriebe gemäß dem Oberbegriff der Patentansprüche 1 und 2.

Eine derartige Steuereinrichtung ist aus der DE 196 37 001 bekannt.

Die bekannte Steuereinrichtung für ein Getriebe weist mehrere Stellzylinder, eine von einem Motor angetriebene Hydraulikpumpe, einen Tank für ein Hydraulikmedium, gegebenenfalls einen Speicher für unter Druck stehendes Hydraulikmedium und eine als Proportionalregelventil ausgebildete Ventileinrichtung zum Steuern der Stellzylinder sowie eine elektrische Steuereinrichtung zum Ansteuern der Ventileinrichtung auf. Die Hydraulikpumpe mit Motor sowie die Ventileinrichtung und der Speicher sowie der Tank sind zu einer als Hydraulikeinheit dienenden Baueinheit zusammengefasst, die von den Stellzylindern und von der elektrischen Steuereinrichtung baulich getrennt in der Nähe des Getriebes angeordnet ist.

Aus der EP-A-877 877 ist eine Steuerungsanordnung für ein automatisches elektrohydraulisch gesteuertes Getriebe bekannt, bei welchem eine Hydraulikpumpe, eine hydraulische Steuerung und eine elektronische Steuerung unmittelbar benachbart auf den stirnseitigen Getriebeflansch aufgesteckt und mittels Schrauben und Passstiften lagegenau befestigt sind. Die Hydraulikpumpe liegt dabei in einem vertieften Bereich des Getriebeflansches und wird von einer Welle des Getriebes angetrieben. Die hydraulische und die elektronische Steuerung wird von einem Abschlussdeckel umschlossen, der mit dem Getriebeflansch unter Zwischenschaltung einer Dichtung verschraubt ist.

Aus der EP 1 177 393 B1 ist eine elektronisch-hydraulische Steuereinrichtung für Getriebe von Fahrzeugen, vorzugsweise von Kraftfahrzeugen bekannt. Die Steuereinrichtung besteht aus einer Baueinheit von Magnetventilen sowie eines Motors, welche in einer Einbauöffnung des Getriebegehäuses eingesetzt sind. Dabei befindet sich ein Teil der Baueinheit außerhalb des Getriebes und ein zweiter Teil innerhalb des Getriebes. Die Baueinheit enthält weiter eine Elektronikplatine zur Steuerung der Magnetventile. Ein Speicher für ein Druckmedium ist separat angeordnet und über eine Druckleitung angeschlossen. Als Druckmittel wird das im Getriebe vorhandene Öl benutzt. Das Getriebe dient gleichzeitig als Ölsumpf.

Der Erfindung liegt die Aufgabe zugrunde eine Steuereinrichtung der eingangs erwähnten Art zu verbessern.

Diese Aufgabe wird mit den in den Patentansprüchen 1 und 2 angegebenen Ausführungen der Erfindung gelöst. Weiterbildungen und vorteilhafte Ausgestaltungen der Erfindung sind in den Unteransprüchen angegeben.

Die im Patentanspruch 1 angegebene Ausführung der Erfindung bietet insbesondere den Vorteil, eine aus wenigstens einem Teil einer Druckversorgungseinrichtung, einer steuerbaren Ventileinrichtung und einer elektrischen Steuereinrichtung bestehende kompakte Baueinheit zu erhalten, die sich einfach montieren lässt und die mit einfachen Mitteln an jedes Getriebe angepasst werden kann.

Mit der im Patentanspruch 2 angegebenen Ausführung der Erfindung wird der Vorteil erzielt, eine wenigstens aus einem Teil einer Druckversorgungseinrichtung, einer steuerbaren Ventileinrichtung, einer elektrischen Steuereinrichtung und Stellzylindern bestehende Baueinheit zu erhalten, die sich einfach an einem Getriebe anordnen läßt.

Durch das Zusammenfassen der steuerbaren Ventileinrichtung, der Druckversorgungseinrichtung und der elektrischen Steuereinrichtung und gegebenenfalls auch der Stellzylinder zu einer Baueinheit sind sowohl die Druckmittelverbindungen als auch die elektrischen Verbindungen kurz. Zudem sind die elektrischen Verbindungsmittel und auch die Druckmittelverbindungsmittel wenigstens zum Teil im Gehäuse der Baueinheit gelegen. Beschädigungen an den elektrischen Verbindungsmitteln und an den Druckmittelverbindungsmitteln durch äußere Einflüsse und möglicherweise dadurch verursachte Beeinträchtigungen der Funktion der steuerbaren Ventileinrichtung, der Pumpe, des Motors, der elektrischen Steuereinrichtung und gegebenenfalls auch der Stellzylinder sind durch die vorstehend erwähnten Maßnahmen nahezu ausgeschlossen.

Gemäß einer vorteilhaften Weiterbildung der Erfindung wird die steuerbare Ventileinrichtung von mehreren elektromagnetisch betätigbaren Ventilen gebildet.

Anhand der Zeichnung werden nachfolgend zwei Ausführungsbeispiele der Erfindung näher erläutert.

Es zeigen:
- Fig. 1: schematisch eine aus zwei Stellzylindern bestehende Stellzylinder-Baueinheit und eine aus einer Druckversorgungseinrichtung und einer steuerbaren Ventileinrichtung sowie einer elektrischen Steuereinrichtung bestehende Baueinheit, wobei die steuerbare Ventileinrichtung über Druckmittelleitungen mit den Stellzylindern verbunden ist;
- Fig. 2: die aus der steuerbaren Ventileinrichtung, der Druckversorgungseinrichtung und der elektrischen Steuereinrichtung bestehende Baueinheit und
- Fig. 3: eine aus der steuerbaren Ventileinrichtung, der Druckversorgungseinrichtung, der elektrischen Steuereinrichtung und den Stellzylindern bestehende Baueinheit.

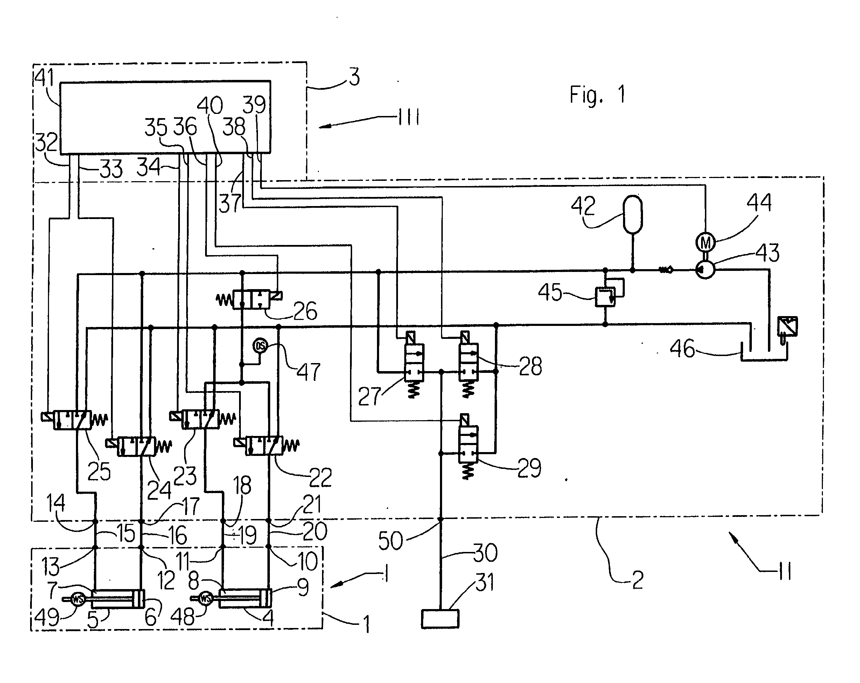

In Fig. 1 ist schematisch eine Steuereinrichtung für ein Getriebe und eine Kupplung dargestellt, die eine aus zwei Stellzylindern für das Getriebe bestehende Stellzylinder-Baueinheit (I), einen Kupplungszylinder und eine aus einer Hydraulikeinheit (II) und einer elektrischen Steuereinrichtung (III) bestehende weitere Baueinheit (II, III) aufweist.

Ein erster Stellzylinder (4) und ein zweiter Stellzylinder (5) sind zu einer Stellzylinder-Baueinheit (I) zusammengefaßt, z.B. in der Weise, daß in einem für beide Stellzylinder (4 und 5) gemeinsamen Gehäuse (1) zwei Zylinderbohrungen vorgesehen sind, wobei in jeder der Zylinderbohrungen ein Kolben in Richtung seiner Längsachse bewegbar angeordnet ist. Eine erste Druckmittelkammer (9) des ersten Stellzylinders (4) ist mit einem am Gehäuse (1) angeordneten ersten Druckmittelanschluss (10) verbunden und eine zweite Druckmittelkammer (8) des ersten Stellzylinders (4) ist mit einem am Gehäuse (1) angeordneten zweiten Druckmittelanschluss (11) verbunden. Eine erste Druckmittelkammer (6) des zweiten Stellzylinders (5) ist mit einem am Gehäuse (1) angeordneten dritten Druckmittelanschluss (12) verbunden und eine zweite Druckmittelkammer (7) des zweiten Stellzylinders (5) ist mit einem am Gehäuse (1) angeordneten vierten Druckmittelanschluss (13) verbunden.

Eine Hydraulikeinheit (II), die aus einer Druckversorgungseinrichtung (43, 44, 42, 45, 46) und einer steuerbaren Ventileinrichtung (22, 23, 24, 25, 26, 27, 28, 29) zum Steuern der Stellzylinder (4 und 5) und zum Steuern des Kupplungszylinders (31) besteht, ist mit einer elektrischen Steuereinrichtung (III) zu einer weiteren Baueinheit (II, III) zusammengefaßt. Die Druckversorgungseinrichtung (43, 44, 42, 45, 46) besteht aus einer Pumpe (43), einem als Antrieb für die Pumpe (43) dienenden Motor (44), einem Druckspeicher (42) für unter Druck stehendes Hydraulikmedium, einem Tank (46) für das Hydraulikmedium und einem Druckbegrenzungsventil (45). Die Pumpe (43) und der Speicher (42) dienenen als Druckmittelquelle (43, 42). Der Tank (46) für das Hydraulikmedium hat zusätzlich die Funktion einer Druckmittelsenke.

Die steuerbare Ventileinrichtung (22, 23, 24, 25, 26, 27, 28, 29) weist ein erstes Gehäuseteil (2) auf, in welchem ein als 3/2-Wegeventil ausgebildetes erstes Elektromagnetventil (22), ein als 3/2-Wegeventil ausgebildetes zweites Elektromagnetventil (23) und ein als 2/2-Wegeventil ausgebildetes drittes Elektromagnetventil (26) angeordnet sind. Ein Druckmitteleingang des dritten Elektromagnetventils (26) ist über eine Druckmittelleitung mit der Druckmittelquelle (43,42) und ein Druckmittelausgang des dritten Elektromagnetventils (26) ist über Druckmittelleitungen mit einem Druckmitteleingang des ersten Elektromagnetventils (22) und einem Druckmitteleingang des zweiten Elektromagnetventils (23) verbunden. Ein Druckmittelausgang des ersten Elektromagnetventils (22) steht über eine Druckmittelleitung mit einem ersten Druckmittelanschluss (21) des ersten Gehäuseteiles (2) und ein Druckmittelausgang des zweiten Elektromagnetventils (23) steht über eine weitere Druckmittelleitung mit einem zweiten Druckmittelanschluss (18) des ersten Gehäuseteiles (2) in Verbindung. Der erste Druckmittelanschluss (21) des ersten Gehäuseteiles (2) ist über eine Druckmittelleitung (20) mit dem ersten Druckmittelanschluss (10) der Stellzylinder-Baueinheit (I) verbunden und der zweite Druckmittelanschluss (18) des ersten Gehäuseteiles (2) steht über eine Druckmittelleitung (19) mit dem zweiten Druckmittelanschluss (11) der Stellzylinder-Baueinheit (I) in Verbindung. Ein Druckmittelauslass des ersten Elektromagnetventils (22) und ein Druckmittelauslass des zweiten Elektromagnetventils (23) sind über Druckmittelleitungen mit dem Tank (46) verbunden.

Mittels der drei Elektromagnetventile (22, 23, 26) ist wahlweise die erste Druckmittelkammer (9) oder die zweite Druckmittelkammer (8) des ersten Stellzylinders (4) wahlweise mit der Druckmittelquelle (43, 42) oder mit dem Tank (46) verbindbar oder gegen beide absperrbar.

Im ersten Gehäuseteil (2) sind ein viertes Elektromagnetventil (24), ein fünftes Elektromagnetventil (25), ein sechstes Elektromagnetventil (27), ein siebentes Elektromagnetventil (28) und ein achtes Elektromagnetventil (29) angeordnet. Ein Druckmitteleingang des als 3/2-Wegeventil ausgebildeten vierten Elektromagnetventils (24) und ein Druckmitteleingang des als 3/2-Wegeventil ausgebildeten fünften Elektromagnetventils (25) sind über Druckmittelleitungen mit der Druckmittelquelle (43, 42) und ein Druckmittelauslass des vierten Elektromagnetventils (24) sowie ein Druckmittelauslass des fünften Elektromagnetventils (25) sind über Druckmittelleitungen mit dem Tank (46) verbunden. Ein Druckmittelausgang des vierten Elektromagnetventils (24) ist über eine Druckmittelleitung mit einem dritten Druckmittelanschluss (17) des ersten Gehäuseteiles (2) und ein Druckmittelausgang des fünften Elektromagnetventils (25) ist über eine Druckmittelleitung mit einem vierten Druckmittelanschluss (14) des ersten Gehäuseteiles (2) verbunden. Der dritte Druckmittelanschluss (17) des ersten Gehäuseteiles (2) ist über eine Druckmittelleitung (16) mit dem dritten Druckmittelanschluss (12) der Stellzylinder-Baueinheit (I) und der vierte Druckmittelanschluss (14) des ersten Gehäuseteiles (2) ist über eine Druckmittelleitung (15) mit dem vierten Druckmittelanschluss (13) der Stellzylinder-Baueinheit (I) verbunden.

Mittels des vierten Elektromagnetventils (24) und des fünften Elektromagnetventils (25) ist wahlweise die erste Druckmittelkammer (6) oder die zweite Druckmittelkammer (7) des zweiten Stellzylinders (5) wahlweise mit der Druckmittelquelle (43, 42) oder mit dem Tank (46) verbindbar.

Das als 2/2-Wegeventil ausgebildete sechste Elektromagnetventil (27), dessen Druckmitteleingang über eine Druckmittelleitung mit der Druckmittelquelle (43, 42) und dessen Druckmittelausgang über eine Druckmittelleitung mit einem fünften Druckmittelanschluss (50) des ersten Gehäuseteiles (2) der steuerbaren Ventileinrichtung (22, 23, 24, 25, 26, 27, 28, 29) verbunden ist, dient zum Einsteuern von Druckmittel in den Kupplungszylinder (31).

Ein Druckmitteleingang des als 2/2-Wegeventil ausgebildeten siebenten Elektromagnetventils (28) der steuerbaren Ventileinrichtung (22, 23, 24, 25, 26, 27, 28, 29) ist über eine Druckmittelleitung mit dem fünften Druckmittelanschluss (50) und ein Ausgang des siebenten Elektromagnetventils (28) ist über eine Druckmittelleitung mit dem Tank (46) verbunden. Das als 2/2-Wegeventil ausgebildete achte Elektromagnetventil (29) ist mit seinem Druckmitteleingang über eine Druckmittelleitung an die mit dem fünften Druckmittelanschluss (50) des ersten Gehäuseteiles (2) verbundene Druckmittelleitung und mit seinem Druckmittelausgang über eine Druckmittelleitung an den Tank (46) angeschlossen. Der fünfte Druckmittelanschluss (50) des ersten Gehäuseteiles (2) ist über eine Druckmittelleitung (30) mit dem Kupplungszylinder (31) verbunden.

Das siebente Elektromagnetventil (28) und das achte Elektromagnetventil (29) dienen zum Verbinden des Kupplungszylinders (31) mit dem Tank (46).

Die Elektromagneten der von den Elektromagnetventilen gebildeten steuerbaren Ventileinrichtung (22, 23, 24, 25, 26, 27, 28, 29) sind über elektrische Leitungen (32, 33, 34, 35, 36, 37, 38, 40) mit elektrischen Anschlüssen einer elektrischen Steuereinrichtung (III) elektrisch verbunden. Der als Elektromotor ausgebildete Motor (44) für die Pumpe (43) ist über eine elektrische Leitung (39) mit der elektrischen Steuereinrichtung (III) verbunden. Ebenso sind den Stellzylindern (4, 5) zugeordnete Wegsensoren (48, 49) sowie ein Drucksensor (47) über nicht dargestellte elektrische Leitungen mit der elektrischen Steuereinrichtung (III) elektrisch verbunden. Der Drucksensor (47) ist in der Druckmittelleitung angeordnet, welche den Druckmittelausgang des dritten Elektromagnetventils (26) mit dem Druckmitteleingang des ersten Elektromagnetventils (22) und dem Druckmitteleingang des zweiten Elektromagnetventils (23) verbindet.

Die elektrische Steuereinrichtung (III) weist wenigstens einen in einem zweiten Gehäuseteil (3) angeordneten Träger (41) für elektrische und elektronische Bauteile auf. Der Träger (41) kann z.B. von einer Leiterplatte gebildet werden, auf welcher elektrische und elektronische Ein-richtungen zum Auswerten der von den Wegsensoren (48, 49) und dem Drucksensor (47) abgegebenen Signale und zum Erzeugen von Steuersignalen angeordnet sind. Die Steuersignale, welche abhängig sind von den Signalen der Wegsensoren (48, 49) und des Drucksensors (47) sowie von Signalen einer nicht gezeigten Gangwahleinrichtung, dienen zum Steuern der Ventileinrichtung (22, 23, 24, 25, 26, 27, 28, 29).

Das die elektrischen und elektronischen Bauteile enthaltende zweite Gehäuseteil (3) der elektrischen Steuereinrichtung (III) ist mittels Verbindungsmitteln, wie z.B. Schrauben, Klammern, Rast- oder Schnappverbindungsmitteln, mit dem die steuerbare Ventileinrichtung (22, 23, 24, 25, 26, 27, 28, 29), den Drucksensor (47) und gegebenenfalls das Druckregelventil (45) enthaltenden ersten Gehäuseteil (2) verbunden und bildet mit diesem ein Gehäuse (2, 3) für die steuerbare Ventileinrichtung (22, 23, 24, 25, 26, 27, 28, 29), den Drucksensor (47) das Druckregelventil (45) und die elektrische Steuereinrichtung (III). Die elektrische Verbindung des Trägers (41 ) und der auf dem Träger (41) angeordneten elektrischen und elektronischen Bauteile mit den elektrischen Leitungen oder gegebenenfalls mit den elektrischen Kontakten der Elektromagneten der Elektromagnetventile (22, 23, 24, 25, 26, 27, 28, 29) und des Drucksensors (47) wird vorzugsweise mit elektrischen Steckverbindungsmitteln, wie Stec??kerstiften und Steckerbuchsen, hergestellt.

Die von der steuerbaren Ventileinrichtung (22, 23, 24, 25, 26, 27, 28, 29) und wenigstens einem Teil der Druckversorgungseinrichtung (44, 43, 42, 45, 46) gebildete Druckmitteleinheit, in diesem Ausführungsbeispiel die Hydraulikeinheit (II), bildet so mit der elektrischen Steuereinrichtung (III) die Baueinheit (II, III). Unter wenigstens einem Teil der Druckversorgungseinrichtung (44, 43, 42, 45, 46) ist z.B. wenigstens die Kombination Pumpe (43) und Motor (44) zu verstehen.

Gemäß der Erfindung ist es auch möglich, das Druckbegrenzungsventil (45) der Druckversorgungseinrichtung (44, 43, 42, 45, 46) nicht im oder am Gehäuse (2, 3) der steuerbaren Ventileinrichtung (22, 23, 24, 25, 26, 27, 28, 29) und der elektrischen Steuereinrichtung (III) sondern von diesem baulich getrennt an einem geeigneten Platz in der Nähe der Baueinheit (II, III) anzuordnen.

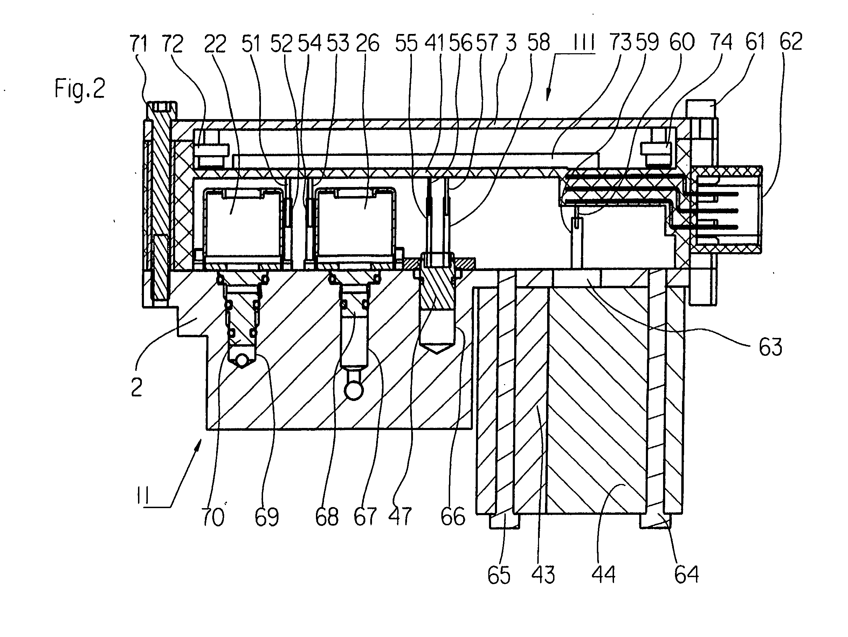

Fig. 2 zeigt das erste Gehäuseteil (2) und das als Deckel für das erste Gehäuseteil (2) dienende zweite Gehäuseteil (3), die zusammen das Gehäuse (2, 3) für die steuerbare Ventileinrichtung (22, 23, 24, 25, 26, 27, 28, 29) und die elektrische Steuereinrichtung (III) bilden. Die beiden Gehäuseteile (2 und 3) sind mittels als Schrauben ausgebildeter Verbindungsmittel (61, 71) miteinander verbunden. Im ersten Gehäuseteil (2) ist eine erste abgestufte Bohrung (69) zur Aufnahme eines Ventileinsatzes (70) für das erste Elektromagnetventil (22) und eine weitere abgestufte Bohrung (67) zur Aufnahme eines Ventileinsatzes (68) für das dritte Elektromagnetventil (26) angeordnet. Die Aufnahmebohrungen und Einsätze für die übrigen, in Fig. 1 gezeigten Elektromagnetventile (23, 24, 25, 27, 28, 29) sind in Fig. 2 nicht dargestellt. Die von den Einsätzen (70 und 68) gebildeten Ein- und Ausgänge der Elektromagnetventile (22, 26) sind durch nicht dargestellte Gehäusekanäle, die als Druckmittelleitungen dienen, mit den ihnen zugeordneten Druckmittelanschlüssen des ersten Gehäuseteiles (2) und zum Teil auch untereinander verbunden, wie es in Fig.1 gezeigt wird. Eine weitere abgestufte Bohrung (66) im ersten Gehäuseteil (2) dient zur Aufnahme des Drucksensors (47).

Die Elektromagnetventile (22, 26) sitzen mit ihrer einen Seite auf den ihnen zugeordneten Ventileinsätzen (70, 68) und auf dem Boden des ersten Gehäuseteiles (2) auf und erstrecken sich mit ihrer anderen Seite in Richtung auf das zweite Gehäuseteil (3) zu. Am Elektromagneten des ersten Elektromagnetventils (22) ist ein elektrischer Anschluß angeordnet, welcher Steckerbuchsen (52) aufweist. Ebenso weist der Elektromagnet des dritten Elektromagnetventils (26) einen elektrischen Anschluß mit Steckerbuchsen (54) und der Drucksensor (47) einen elektrischen Anschluß mit Steckerbuchsen (55 und 58) auf, welche sich ebenfalls in Richtung auf das zweite Gehäuseteil (3) zuerstrecken. In gleicher Weise sind die Elektromagneten der hier nicht dargestellten übrigen Elektromagnetventile (23, 24, 25, 27, 28, 29) mit elektrischen Anschlüssen versehen, die Steckerbuchsen aufweisen, welche sich in Richtung auf das zweite Gehäuseteil (3) zuerstrecken.

An der dem ersten Gehäuseteil (2) zugewandten Seite des zweiten Gehäuseteiles (3) ist mittels Halteelementen (72, 74), die z.B. als Schrauben ausgebildet sein können, ein aus einem Isolierstoff, wie z.B. Kunststoff, bestehender Träger (41) für elektrische und elektronische Bauteile (73) der elektrischen Steuereinrichtung (III) befestigt. Der Träger (41) kann als Leiterplatte ausgebildet sein. An dem Träger (41) sind mit den elektrischen und elektronischen Bauteilen verbundene Steckerstifte (51, 53, 56, 57) so angeordnet, daß sie sich in Richtung auf die Stekkerbuchsen (52, 54, 55, 58) zuerstrecken und nach dem Zusammenfügen der beiden Gehäuseteile (2 und 3) mit den ihnen zugeordneten Steckerbuchsen (52, 54, 55, 58) eine elektrische Steckverbindung bilden. Es sind weitere mit den elektrischen und elektronischen Bauteilen der elektrischen Steuereinrichtung (III) verbundene Steckerstifte vorgesehen, die durch die Seitenwand des zweiten Gehäuseteiles (3) hindurchgeführt sind und mit einem in der Seitenwand des zweiten Gehäuseteiles (3) angeordneten Stekkergehäuse einen elektrischen Anschlußstecker (62) für die elektrische Steuereinrichtung (III) bilden.

Das erste Gehäuseteil (2) weist auf seiner dem zweiten Gehäuseteil (3) abgewandten Seite eine Stufe auf. An den abgestuften Bereich des ersten Gehäuseteiles (2) sind die Pumpe (43) und der Motor (44) angesetzt und mittels Verbindungsmitteln (64, 65), wie z. B. Schrauben, mit dem ersten Gehäuseteil (2) verbunden. Der Motor (44) besitzt einen elektrischen Anschluß (63, 59), der sich durch eine Öffnung im ersten Gehäuseteil (2) hindurch in das Gehäuse (2, 3) hineinerstreckt. Steckerbuchsen (59) des elektrischen Anschlusses (63, 59) erstrecken sich in Richtung auf ihnen zugeordnete, an dem Träger (41) angeordnete Steckerstifte (60), von denen in der Zeichnung nur einer dargestellt ist, zu und bilden mit diesen eine elektrische Steckverbindung.

Die im ersten Gehäuseteil (2) angeordnete steuerbare Ventileinrichtung (22, 23, 24, 25, 26, 27, 28, 29) bildet so mit der am ersten Gehäuseteil (2) befestigten Pumpe (43), dem an der Pumpe (43) angeordneten und am ersten Gehäuseteil (2) befestigten Motor-(44) und der im zweiten Gehäuseteil (3) angeordneten elektrischen Steuereinrichtung (III) die weitere Baueinheit (II, III).

Die elektrischen und elektronischen Bauteile sowie die elektrischen Verbindungsmittel der elektrischen Steuereinrichtung (III), der steuerbaren Ventileinrichtung (22, 23, 24, 25, 26, 27, 28, 29), des Drucksensors (47) und des Motors (44) liegen geschützt in dem vom ersten Gehäuseteil (2) und vom zweiten Gehäuseteil (3) begrenzten Raum.

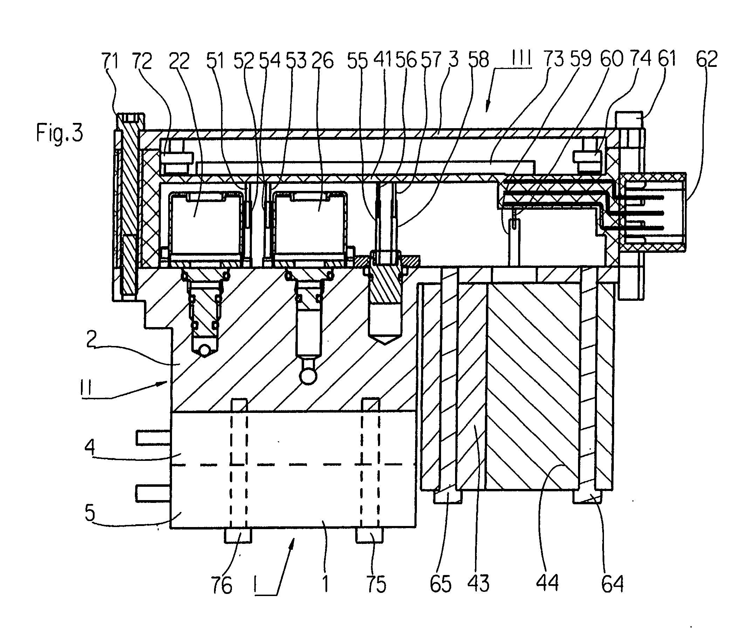

Fig. 3 zeigt die aus der Hydraulikeinheit (II) und der elektrischen Steuereinrichtung (III) bestehende Baueinheit (II, III), wobei an der Baueinheit (II, III) zusätzlich die aus den beiden Stellzylindern bestehende Stellzylinder-Baueinheit (I) angeordnet ist.

Da die Hydraulikeinheit (II) und die elektrische Steuereinrichtung (III) den gleichen Aufbau aufweisen und auch auf die gleiche Art und Weise miteinander verbunden sind, wie dies in Fig. 2 dargestellt ist, wird nachfolgend auf diese Einrichtungen nur soweit eingegangen, wie es zum Verständnis dieses Ausführungsbeispieles erforderlich ist.

An der dem zweiten Gehäuseteil (3) abgewandten Seite des ersten Gehäuseteiles (2) des Gehäuses (2, 3) sind mittels der als Verbindungsmittel (64, 65) dienenden Schrauben die Pumpe (43) und der Motor (44) befestigt. Auf derselben Seite des ersten Gehäuseteiles (2) ist die aus den beiden Stellzylindern (4 und 5) bestehende Stellzylinder-Baueinheit (I) mittels als Schrauben ausgebildeter Verbindungsmittel (75, 76) ebenfalls mit dem ersten Gehäuseteil (2) und somit mit dem Gehäuse (2, 3) verbunden. Die Druckmittelanschlüsse der Stellzylinder (4, 5) sind über nicht dargestellte Druckmittelleitungen, die auch von als Druckmittelleitungen dienenden Gehäusekanälen im ersten Gehäuseteil (2) gebildet werden können, mit den ihnen zugeordneten Druckmittelausgängen der steuerbaren Ventileinrichtung verbunden.

Die von der steuerbaren Ventileinrichtung (22, 23, 24, 25, 26, 27, 28, 29) und der Druckversorgungseinrichtung (44, 43, 42, 45, 46) gebildete Hydraulikeinheit (II), die von den Stellzylindern (4, 5) gebildete Stellzylinder-Baueinheit (I) und die elektrische Steuereinrichtung (III) bilden so eine Baueinheit (II, I, III).

Es ist gemäß der Erfindung auch möglich, die Stellzylinder (4, 5) nicht zu einer Stellzylinder-Baueinheit zusammenzufassen, sondern die Stellzylinder (4, 5) einzeln am Getriebe oder einzeln an dem die steuerbare Ventileinrichtung (22, 23, 24, 25, 26, 27, 28, 29), den Drucksensor (47) und die elektrische Steuereinrichtung (III) beinhaltenden Gehäuse (2, 3) zu befestigen.

Die Pumpe (43), der Motor (44), der Tank (46), das Druckbegrenzungsventil (45) und gegebenenfalls der Speicher (42), welche die Druckversorgungseinrichtung (43, 44, 46, 45, 42) bilden, können gemäß der Erfindung am Gehäuse (2, 3) oder wenigstens zum Teil im Gehäuse (2, 3) angeordnet werden.

Die steuerbare Ventileinrichtung (22, 23, 24, 25, 26, 27, 28, 29) und gegebenenfalls ein Teil der Druckversorgungseinrichtung (44, 43, 42, 45, 46) kann in dem ersten Gehäuseteil (2) und die elektrische Einrichtung (73) mit dem Träger (41) kann in dem zweiten Gehäuseteil (3) angeordnet sein, wobei die beiden Gehäuseteile zusammen das Gehäuse (2, 3) der aus der Hydraulikeinheit (II), der elektrischen Steuereinrichtung (III) und gegebenenfalls den Stellzylindern (4, 5) bestehenden Baueinheit (II, III) bzw. (II, III, 4, 5) bilden.

Es ist gemäß der Erfindung jedoch auch möglich, die steuerbare Ventileinrichtung (22, 23, 24, 25, 26, 27, 28, 29) und gegebenenfalls einen Teil der Druckversorgungseinrichtung (44, 43, 24, 45, 46) in einem ersten geschlossenen Gehäuse und die elektrische Einrichtung (73) mit dem Träger (41) in einem zweiten geschlossenen Gehäuse anzuordnen und diese beiden Gehäuse mittels Verbindungsmitteln, wie z.B. Schrauben, miteinander zu verbinden. Beide Gehäuse weisen Öffnungen auf, durch welche elektrische Verbindungsmittel hindurchgeführt sind, die zum elektrischen Verbinden der in dem ersten geschlossenen Gehäuse angeordneten elektrischen Einrichtung -Elektromagneten der Elektromagnetventile, Drucksensor- mit der im zweiten geschlossenen Gehäuse angeordneten elektrischen Einrichtung (73) mit Träger (41) dienen. Diese beiden miteinander verbundenen Gehäuse bilden dann das Gehäuse der aus der Hydraulikeinheit (II), der elektrischen Steuereinrichtung (III) und gegebenenfalls den Stellzylindern (4, 5) bestehenden Baueinheit (II, III) bzw. (II, III, 4, 5).

## Patentansprüche

1. Steuereinrichtung für ein Getriebe, mit folgenden Merkmalen:
a) es sind mit dem Druck einer Druckversorgungseinrichtung (43, 44, 42, 45, 46) beaufschlagbare Stellzylinder (4, 5) vorgesehen;
b) es ist eine steuerbare Ventileinrichtung (22, 23, 24, 25, 26, 27, 28, 29) vorgesehen, über welche die Stellzylinder (4, 5) mit der Druckversorgungseinrichtung (43, 44, 42, 45, 46) verbindbar sind;
c) es ist eine elektrische Steuereinrichtung (III) zum Ansteuern der steuerbaren Ventileinrichtung (22, 23, 24, 25, 26, 27, 28, 29) vorgesehen;
d) es sind ein Speicher (42) und ein Tank (46) vorgesehen **dadurch gekennzeichnet, daß** die steuerbare Ventileinrichtung (22, 23, 24, 254, 26, 27, 28, 29), wenigstens ein Teil der Druckversorgungseinrichtung (43, 44, 42, 45 46) und die elektrische Steuereinrichtung (III) zu einer aus einzelnen geschlossenen Gehäuseteilen (2, 3) bestehenden Kompakten Baueinheit zusammengefasst sind, wobei der Speicher (42) und der Tank (46) im Gehäuse (2,3) der Baueinheit oder außen am Gehäuse (2,3) der Baueinheit angeordnet sind, derart daß sie ein Teil der Baueinheit sind.

2. Steuereinrichtung für ein Getriebe, mit folgenden Merkmalen:
a) es sind mit dem Druck einer Druckversorgungseinrichtung (43, 44, 42, 45, 46) beaufschlagbare Stellzylinder (4, 5) vorgesehen;
b) es ist eine steuerbare Ventileinrichtung (22, 23, 24, 25, 26, 27, 28, 29) vorgesehen, über welche die Stellzylinder (4, 5) mit der Druckversorgungseinrichtung (43, 44, 42, 45, 46) verbindbar sind;
c) es ist eine elektrische Steuereinrichtung (III) zum Ansteuern der steuerbaren Ventileinrichtung (22, 23, 24, 25, 26, 27, 28, 29) vorgesehen;
d) es sind ein Speicher (42) und ein Tank (46) vorgesehen **dadurch gekennzeichnet, daß** die steuerbare Ventileinrichtung (22, 23, 24, 25, 26, 27, 28, 29), wenigstens ein Teil der Druckversorgungseinrichtung (43, 44, 42, 45, 46), die elektrische Steuereinrichtung (III) und die Stellzylinder (4, 5) zu einer aus einzelnen geschlossenen Gehäuseteilen (1, 2, 3) bestehenden Kompakten Baueinheit zusammengefasst sind, wobei der Speicher (42) und der Tank (46) im Gehäuse (2,3) der Baueinnheit oder außen am Gehäuse (2,3) der Baueinheit angeordnet sind, derart daß sie ein Teil der Baueinheit sind.

3. Steuereinrichtung nach wenigstens einem der vorhergehenden Ansprüche, **dadurch gekennzeichnet, daß** die Druckversorgungseinrichtung (43, 44, 42, 45, 46) eine Pumpe (43), einen Motor (44) zum Antreiben der Pumpe (43), einen Tank (46) für Hydraulikmedium und einen Speicher (42) für unter Druck stehendes Hydraulikmedium aufweist.

4. Steuereinrichtung nach wenigstens einem der vorhergehenden Ansprüche, **dadurch gekennzeichnet, daß** die Druckversorgungseinrichtung aus einem Kompressor und einem Druckluft-Vorratsbehälter besteht.

5. Steuereinrichtung nach wenigstens einem der vorhergehenden Ansprüche, **gekennzeichnet durch** die folgenden Merkmale:
a) die aus wenigstens der steuerbaren Ventileinrichtung (22, 23, 24, 25, 26, 27, 28, 29), wenigstens einem Teil der Druckversorgungseinrichtung (43, 44, 42, 45, 46) und der elektrischen Steuereinrichtung (III) bestehende Baueinheit weist ein Gehäuse (2, 3) auf, welches aus einem ersten Gehäuseteil (2) und einem zweiten Gehäuseteil (3) besteht, wobei die beiden Gehäuseteile (2, 3) mittels Verbindungsmitteln (61, 71) miteinander verbunden sind;
b) im ersten Gehäuseteil (2) ist die steuerbare Ventileinrichtung (22, 23, 24, 25, 26, 27, 28, 29) angeordnet und im zweiten Gehäuseteil (3) ist die elektrische Steuereinrichtung (III) angeordnet;
c) wenigstens die Pumpe (43) und der Motor (44) der Druckversorgungseinrichtung (43, 44, 42, 45, 46) sind am Gehäuse (2, 3) angeordnet und mittels Verbindungsmitteln (64, 65) mit dem Gehäuse (2, 3) verbunden.

6. Steuereinrichtung nach wenigstens einem der vorhergehenden Ansprüche, **gekennzeichnet durch** die folgenden Merkmale:
a) die aus wenigstens der steuerbaren Ventileinrichtung (22, 23, 24, 25, 26, 27, 28, 29), wenigstens einem Teil der Druckversorgungseinrichtung (43, 44, 42, 45, 46) und der elektrischen Steuereinrichtung (III) bestehende Baueinheit weist ein erstes Gehäuse und ein zweites Gehäuse auf, wobei die beiden Gehäuse mittels Verbindungsmitteln miteinander verbunden sind;
b) im ersten Gehäuse ist die steuerbare Ventileinrichtung (22, 23, 24, 25, 26, 27, 28, 29) angeordnet und im zweiten Gehäuse ist die elektrische Steuereinrichtung (III) angeordnet;
c) wenigstens die Pumpe (43) und der Motor (44) der Druckversorgungseinrichtung (43, 44, 42, 45, 46) sind an wenigstens einem der Gehäuse angeordnet und mit wenigstens dem einen Gehäuse mittels Verbindungsmitteln verbunden;
d) jedes der beiden Gehäuse weist Öffnungen auf, **durch** welche elektrische Verbindungsmittel hindurchgeführt sind, die zum Verbinden von im ersten Gehäuse angeordneten elektrischen Einrichtungen mit im zweiten Gehäuse angeordneten elektrischen Einrichtungen dienen.

7. Steuereinrichtung nach wenigstens einem der vorhergehenden Ansprüche, **dadurch gekennzeichnet, daß** die steuerbare Ventileinrichtung (22, 23, 24, 25, 26, 27, 28, 29) aus mehreren Elektromagnetventilen besteht.

8. Steuereinrichtung nach wenigstens einem der vorhergehenden Ansprüche, **dadurch gekennzeichnet, daß** die elektrischen Verbindungsmittel der elektrischen Bauelemente der steuerbaren Ventileinrichtung (22, 23, 24, 25, 26, 27, 28, 29), der elektrischen Bauelemente des wenigstens einen Teiles der Druckversorgungseinrichtung (43, 44, 42, 45, 46) und der elektrischen und elektronischen Bauelemente der elektrischen Steuereinrichtung (III) in einem von den beiden Gehäuseteilen (2, 3) oder in einem von den beiden Gehäusen begrenzten Raum gelegen sind.

## Claims

1. Control device for a transmission, having the following features:
a) positioning cylinders (4, 5) arranged to be acted upon by the pressure of a pressure-supply device (43, 44, 42, 45, 46) are provided;
b) a controllable valve device (22, 23, 24, 25, 26, 27, 28, 29) is provided by means of which the positioning cylinders (4, 5) are connectible to the pressure-supply device (43, 44, 42, 45, 46);
c) an electrical control device (III) for actuating the controllable valve device (22, 23, 24, 25, 26, 27, 28, 29) is provided;
d) a reservoir (42) and a tank (46) are provided;
**characterized in that** the controllable valve device (22, 23, 24, 25, 26, 27, 28, 29), at least a part of the pressure-supply device (43, 44, 42, 45, 46) and the electrical control device (III) are combined to form a compact assembly consisting of individual closed housing parts (2, 3), with the reservoir (42) and the tank (46) being arranged in the housing (2, 3) of the assembly or externally on the housing (2, 3) of the assembly in such a way that they are a part of the assembly.

2. Control device for a transmission, having the following features:
a) positioning cylinders (4, 5) arranged to be acted upon by the pressure of a pressure-supply device (43, 44, 42, 45, 46) are provided;
b) a controllable valve device (22, 23, 24, 25, 26, 27, 28, 29) is provided by means of which the positioning cylinders (4, 5) are connectible to the pressure-supply device (43, 44, 42, 45, 46);
c) an electrical control device (III) for actuating the controllable valve device (22, 23, 24, 25, 26, 27, 28, 29) is provided;
d) a reservoir (42) and a tank (46) are provided;
**characterized in that** the controllable valve device (22, 23, 24, 25, 26, 27, 28, 29), at least a part of the pressure-supply device (43, 44, 42, 45, 46), the electrical control device (III) and the positioning cylinders (4, 5) are combined to form a compact assembly consisting of individual closed housing parts (1, 2, 3), with the reservoir (42) and the tank (46) being arranged in the housing (2, 3) of the assembly or externally on the housing (2, 3) of the assembly in such a way that they are a part of the assembly.

3. Control device according to at least one of the preceding claims, **characterized in that** the pressure-supply device (43, 44, 42, 45, 46) has a pump (43), a motor (44) for driving the pump (43), a tank (46) for hydraulic medium and a reservoir (42) for hydraulic medium under pressure.

4. Control device according to at least one of the preceding claims, **characterized in that** the pressure-supply device consists of a compressor and a compressed air storage container.

5. Control device according to at least one of the preceding claims,
**characterized by** the following features:
a) the assembly consisting of at least the controllable valve device (22, 23, 24, 25, 26, 27, 28, 29), at least a part of the pressure-supply device (43, 44, 42, 45, 46) and the electrical control device (III) has a housing (2, 3) which consists of a first housing part (2) and a second housing part (3), the two housing parts (2, 3) being connected to one another by means of connecting means (61, 71);
b) in the first housing part (2) there is arranged the controllable valve device (22, 23, 24, 25, 26, 27, 28, 29) and in the second housing part (3) there is arranged the electrical control device (III);
c) at least the pump (43) and the motor (44) of the pressure-supply device (43, 44, 42, 45, 46) are arranged on the housing (2, 3) and are connected to the housing (2, 3) by means of connecting means (64, 65).

6. Control device according to at least one of the preceding claims,
**characterized by** the following features:
a) the assembly consisting of at least the controllable valve device (22, 23, 24, 25, 26, 27, 28, 29), at least a part of the pressure-supply device (43, 44, 42, 45, 46) and the electrical control device (III) has a first housing and a second housing, the two housings being connected to one another by means of connecting means;
b) in the first housing there is arranged the controllable valve device (22, 23, 24, 25, 26, 27, 28, 29) and in the second housing there is arranged the electrical control device (III);
c) at least the pump (43) and the motor (44) of the pressure-supply device (43, 44, 42, 45, 46) are arranged on at least one of the housings and are connected to at least the one housing by means of connecting means;
d) each of the two housings has openings through which electrical connecting means pass, which connecting means serve for connecting electrical devices arranged in the first housing to electrical devices arranged in the second housing.

7. Control device according to at least one of the preceding claims, **characterized in that** the controllable valve device (22, 23, 24, 25, 26, 27, 28, 29) consists of a plurality of electromagnetic valves.

8. Control device according to at least one of the preceding claims, **characterized in that** the electrical connecting means of the electrical components of the controllable valve device (22, 23, 24, 25, 26, 27, 28, 29), the electrical components of the at least a part of the pressure-supply device (43, 44, 42, 45, 46) and the electrical and electronic components of the electrical control device (III) are located in one of the two housing parts (2, 3) or in a space defined by the two housings.

## Revendications

1. Dispositif de commande pour une boîte de vitesses, présentant les éléments suivants :
a) il est prévu des vérins de positionnement (4, 5) susceptibles d'être alimentés avec la pression d'un système d'alimentation de pression (43, 44,42,45,46);
b) il est prévu un dispositif à soupapes (22, 23, 24, 25, 26, 27, 28, 29) susceptible d'être commandé, via lequel les vérins de positionnement (4, 5) peuvent être relié au système d'alimentation de pression (43, 44, 42, 45, 46) ;
c) il est prévu un dispositif de commande électrique (III) pour piloter le dispositif à soupapes (22, 23, 24, 25, 26, 27, 28, 29) susceptible d'être commandé ;
d) il est prévu un accumulateur (42) et un réservoir (46) ;
**caractérisé en ce que**
le dispositif à soupapes (22, 23, 24, 25, 26, 27, 28, 29) susceptible d'être commandé, au moins une partie du système d'alimentation de pression (43, 44, 42, 45, 46), et le dispositif de commande électrique (III) sont regroupés en une unité structurelle à partir de composants individuels formés par des parties de boîtier fermées (2, 3), et
l'accumulateur (42) et le réservoir (42) sont agencés dans le boîtier (2, 3) de l'unité structurelle ou à l'extérieur sur le boîtier (2, 3) de l'unité structurelle de telle manière qu'ils forment une partie de l'unité structurelle.

2. Dispositif de commande pour une boîte de vitesses, présentant les éléments suivants :
a) il est prévu des vérins de positionnement (4, 5) susceptibles d'être alimentés avec la pression d'un système d'alimentation de pression (43, 44, 42, 45, 46) ;
il est prévu un dispositif à soupapes (22, 23, 24, 25, 26, 27, 28, 29) susceptible d'être commandé, via lequel les vérins de positionnement (4, 5) peuvent être reliés au système d'alimentation de pression (43, 44, 42, 45,46);
c) il est prévu un dispositif de commande électrique (III) pour piloter le dispositif de soupapes (22, 23, 24, 25, 26, 27, 28, 29) susceptible d'être commandé ;
d) il est prévu un accumulateur (42) et un réservoir (46) ;
**caractérisé en ce que** le dispositif à soupapes (22, 23, 24, 25, 26, 27, 28, 29) susceptible d'être commandé, au moins une partie du système d'alimentation de pression (43,44, 42, 45, 46), le dispositif de commande électrique (III) et les vérins de positionnement (4, 5) sont regroupés en une unité structurelle formée de composants individuels constitués par des parties de boîtier fermées (1, 2, 3), et
l'accumulateur (42) et le réservoir (46) sont agencés dans le boîtier (2, 3) de l'unité structurelle ou à l'extérieur sur le boîtier (2, 3) de l'unité structurelle de telle façon qu'ils forment une partie de l'unité structurelle.

3. Dispositif de commande selon l'une au moins des revendications précédentes, **caractérisé en ce que** le système d'alimentation de pression (43, 44, 42, 45, 46) comprend une pompe (43), un moteur (44) pour entraîner la pompe (43), un réservoir (46) pour un fluide hydraulique, et un accumulateur (42) pour le fluide hydraulique sous pression.

4. Dispositif de commande selon l'une au moins des revendications précédentes, **caractérisé en ce que** le système d'alimentation de pression est constitué d'un compresseur et d'un réservoir d'air comprimé.

5. Dispositif de commande selon l'une au moins des revendications précédentes, **caractérisé par** les éléments suivants :
a) l'unité structurelle constituée au moins par le dispositif à soupapes (22, 23, 24, 25, 26, 27, 28, 29) susceptible d'être commandé, par au moins une partie du système d'alimentation de pression (43, 44, 42, 45, 46) et par le dispositif de commande électrique (III) comprend un boîtier (2, 3) qui est formé d'une première partie de boîtier (2) et d'une seconde partie de boîtier (3), les deux parties de boîtier (2, 3) étant reliées l'une à l'autre au moyen d'organes de liaison (61, 71) ;
b) le dispositif à soupapes (22, 23, 24, 25, 26, 27, 28, 29) susceptible d'être commandé est agencé dans la première partie de boîtier (2), et le dispositif de commande électrique (III) est agencé dans la seconde partie de boîtier (3) ;
c) au moins la pompe (43) et le moteur (44) du système d'alimentation de pression (43, 44, 42, 45, 46) sont agencés sur le boîtier (2, 3) et reliés au boîtier (2, 3) au moyen d'organes de liaison (64, 65).

6. Dispositif de commande selon l'une au moins des revendications précédentes, **caractérisé par** les éléments suivants :
a) l'unité structurelle constituée au moins par le dispositif à soupapes (22, 23, 24, 25, 26, 27, 28, 29) susceptible d'être commandé, par au moins une partie du système d'alimentation de pression (43, 44, 42, 45, 46) et par le dispositif de commande électrique (III) comprend un premier boîtier et un second boîtier, les deux boîtiers étant reliés l'un à l'autre au moyen d'organes de liaison ;
b) le dispositif à soupapes (22, 23, 24, 25, 26, 27, 28, 29) susceptible d'être commandé est agencé dans le premier boîtier, et le dispositif de commande électrique (III) est agencé dans le second boîtier ;
c) au moins la pompe (43) et le moteur (44) du système d'alimentation de pression (43, 44, 42, 45, 46) sont agencés sur l'un au moins des boîtiers et reliés audit au moins un boîtier au moyen d'organes de liaison
d) chacun des deux boîtiers présente des ouvertures à travers lesquelles sont passés des moyens de connexion électriques qui servent à la connexion de systèmes électriques agencés dans le premier boîtier avec des systèmes électriques agencés dans le second boîtier.

7. Dispositif de commande selon l'une au moins des revendications précédentes, **caractérisé en ce que** le dispositif à soupapes (22, 23, 24, 25, 26, 27, 28, 29) susceptible d'être commandé est constitué par plusieurs électroaimants.

8. Dispositif de commande selon l'une au moins des revendications précédentes, **caractérisé en ce que** les moyens de connexion électriques des composants électriques du dispositif à soupapes (22, 23, 24, 25, 26, 27, 28, 29) susceptible d'être commandé, des composants électriques de ladite au moins une partie du système d'alimentation de pression (43, 44, 42, 45, 46), et des composants électriques et électroniques du dispositif de commande électrique (III), sont disposés dans un espace délimité par les deux parties de boîtier (2, 3) ou par l'une des deux parties de boîtier.
